# EUROPEAN PATENT SPECIFICATION

(11) **EP 3 986 769 B1**
(45) Date of publication and mention of the grant of the patent: **02.10.2024**
(21) Application number: 20827870.5
(22) Date of filing: 17.06.2020
(51) Int. Cl.: A63G 1/04, A63G 1/10, B62B 15/00, B62B 13/00

(54) **POLE SLEDGE**
STANGENSCHLITTEN
TRAÎNEAU À PERCHE

(30) Priority: 18.06.2019 FI 20197094
(43) Date of publication of application: 27.04.2022
(73) Proprietor: Profunx Oy, 88730 Ylä-Vieksi (FI)
(72) Inventor: NISKANEN, Timo, 00180 Helsinki (FI)
(74) Representative: Berggren Oy
(86) International application number: PCT/FI2020/000011
(87) International publication number: WO 2020/254718

(56) References cited:
- SU-A1- 895 475
- SU-A1- 895 475
- US-A- 2 113 131
- US-A- 392 155
- US-B2- 8 371 952
- JUKKA KURKI: "Napakelkka", YOUTUBE, 10 February 2010 (2010-02-10), pages 1 pp., XP054981389, Retrieved from the Internet <URL:https://www.youtube.com/watch?v=YI1si-gEA6E> [retrieved on 20210209]
- KURKI, JUKKA: "Napakelkka", YOUTUBE, 2 October 2010 (2010-10-02), XP054981389, Retrieved from the Internet <URL:https://www.youtube.com/watch?v=YI1si-gEA6E> [retrieved on 20200928]

## Description

The invention relates to a pole sledge having a vertical hub shaft, a boom having a first boom end and a second boom end, a power unit, and a sledge arrangement, and the first boom end is attached to the sledge arrangement and the boom is fixed to the hub shaft, and the boom and the attachment of the boom to the hub shaft are configured in such a way that the boom is rotatable relative to the hub shaft in such a way that the hub shaft is the centre of rotational movement, and the power unit is configured to rotate the boom.

### BACKGROUND

A pole sledge is a sled that is traditionally placed on ice or snow, rotating around a perimeter. The sled is rotated in one direction about a hub shaft placed in the centre of the circumference. A single rod or boom is attached to the hub shaft, to the outer end of which is a sled rotating around the circumference. By rotating the boom, the sled can reach a very high speed be applying only a very small force. Pole sledges can also be placed on water or on land. Generally, pole sledges are temporary structures that are dismantled and stored as the ice or snow starts to melt. The pole sledge is rotated by muscle force. The structure of the pole sledge has remained the same for hundreds of years.

Patent publication US392155 discloses a carousel arrangement having a mast-like central shaft to which are attached booms with carriages or the like at the outer ends. According to the publication, the carousel arrangement can also be placed on water or ice. There is a round platform around the central shaft that is stationary and below which are the booms. However, the carousel arrangement is much more complex and heavier in structure than a traditional pole sledge with only one boom. Similarly, the carousel arrangement disclosed in patent publication US762531, especially for placement on ice, is quite complex and difficult to handle.

An example of a pole sledge in known from: the jukka kurki: "Napakelkka",Youtube, 10 February 2010 (2010-02-10), page 1 pp., XP054981389,Retrieved from the Internet:URL:https:// www.youtube.com/watch?v=YI1si-gEA6E [retrieved on 2021-02-09]

The problem with known pole sledges is that the pole sledge usually must be operated by more than one person. The safety of pole sledges is also an issue that has not received much attention. Likewise, ease of use has not seen much development.

### BRIEF DESCRIPTION

The object of the invention is a solution that can significantly reduce the disadvantages and drawbacks of the prior art. In particular, it is an object of the invention to provide a solution that is easy and safe to use.

The objects of the invention are attained with a pole sledge characterized by what is stated in the independent claim. Some advantageous embodiments of the invention are disclosed in the dependent claims.

The invention has a pole sledge with a hub shaft and a boom to which the sled is attached. The boom is rotatable so that the sled moves along a circumferential track with the hub axis at its centre. A pushing arrangement is attached to the boom. In addition, the pole sledge has a power unit configured to rotate the boom. The operation of the power unit is controlled by a pushing arrangement. The pushing arrangement and the power unit are configured in such a way that when the user pushes against the pushing arrangement, the boom moves in this pushing direction, i.e. in the direction of rotation.

When reference is made in the text to the upper or the lower parts or respective directions such as down or up, a situation is described in which the pole sledge is in its normal operating position.

In one embodiment of the invention, there is a pole sledge having a vertical hub shaft, a boom having a first boom end and a second boom end, a power unit, and a sledge arrangement. The first boom end is attached to the sledge arrangement and the boom is fixed to the hub shaft, and the boom and the attachment of the boom to the hub shaft are configured in such a way that the boom is rotatable relative to the hub shaft in such a way that the hub shaft is the centre of rotational movement. The power unit is configured to rotate the boom. According to an advantageous embodiment of the invention, the power unit is connected to the hub shaft, and the pole sledge further has a pushing arrangement attached to the boom for pushing the pole sledge by the user to rotate the boom, the pushing arrangement having at least a first position and a second position. The pushing arrangement and power unit are configured to engage when the pushing arrangement is moved from the first to second position and the power unit stops rotating the boom when the pushing arrangement is moved back to the first position.

In one embodiment of the pole sledge according to the invention, the boom is fixed to the hub shaft at least in part by means of a power unit.

In a second embodiment of the pole sledge according to the invention, the power unit is on the hub shaft above the attachment point of the boom. This allows the boom to be placed lower than in traditional solutions. This further reduces the torque between the sledge arrangement and the boom and lighter materials can be used than in traditional pole sledges.

In a third embodiment of the pole sledge according to the invention, the pushing arrangement is at least partially above the boom.

In a fourth embodiment of the pole sledge according to the invention, the power unit is electrically operated, and the pole sledge further has a battery arrangement. In a fifth embodiment of the pole sledge according to the invention, the battery arrangement is detachable. The removable battery arrangement allows it to be charged elsewhere, reducing the need for wiring. In addition, this makes it possible to replace the battery arrangement with a charged battery arrangement, so that the use of the pole sledge is interrupted only briefly.

In a sixth embodiment of the pole sledge according to the invention, the direction of movement of the pushing arrangement or a part of the pushing arrangement from the first position to the second position is parallel to the direction of rotation of the boom.

In a seventh embodiment of the pole sledge according to the invention, in addition to the second position of the pushing arrangement, there are a number of other pushing arrangement positions in which the power unit is configured to engage, and the pushing arrangement and the power unit are further configured to rotate the boom at different speeds. In an eighth embodiment of the pole sledge according to the invention, the pushing arrangement is configured in such a way that different amounts of force must be applied to the pushing arrangement to move the pushing arrangement from the first position to another position, where the power unit rotates the boom in the direction of rotation. In a nineth embodiment of the pole sledge according to the invention, the pushing arrangement and the power unit are configured in such a way that the rotation of the boom is accelerated when a greater force is applied to the pushing arrangement within the adjustment range of the pushing arrangement.

In a tenth embodiment of the pole sledge according to the invention, the pushing arrangement is between the hub shaft and the sledge arrangement, and the pushing arrangement is closer to the hub shaft than to the sledge arrangement. Therefore, the direction of view of the person rotating the pole sledge is the same as the direction of rotation of the pole sledge. This allows the sledge arrangement to stay in sight of the person rotating the pole sledge at all times, increasing safety.

In an eleventh embodiment of the pole sledge according to the invention, the pushing arrangement is configured to return automatically to the first position if the pushing arrangement is not actively held away from the first position. This feature improves security.

In a twelfth embodiment of the pole sledge according to the invention, the pushing arrangement has a third position of the pushing arrangement, and the pushing arrangement and the power unit are configured in such a way that the power unit actively slows down the rotation of the boom when the pushing arrangement is moved to the third position. In a thirteenth embodiment of the pole sledge according to the invention, the direction of movement of the pushing arrangement or a part of the pushing arrangement from the first position to the third position is opposite to the direction of rotation of the boom. This feature improves safety and makes it easier to stop.

An advantage of the invention is that it provides a pole sledge that is easy and safe to use. The invention also makes it possible for persons possessing less physical strength, such as small children, to act as rotators of the pole sledge. The invention further makes it possible to configure the sledge arrangement in ways other than found on conventional pole sledges. The use of a power unit on the pole sledge allows the pole sledge to stop automatically.

### DESCRIPTIONS OF THE FIGURES

In the following, the invention is described in detail. The description refers to the accompanying drawings, in which
- Figure 1: shows an example of a pole sledge according to the invention,
- Figure 2: is a side view of the pole sledge of Figure 1,
- Figure 3: is a side view of the pole sledge of Figure 1 viewed from the direction of the sledge arrangement, and
- Figure 4: shows a top view of the pole sledge of Figure 1.

### DETAILED DESCRIPTIONS OF THE FIGURES

The embodiments in the following description are given as examples only and someone skilled in the art can carry out the basic idea of the invention also in some other way than what is described in the description. Though the description may refer to a certain embodiment or embodiments in several places, this does not mean that the reference would be directed towards only one described embodiment or that the described characteristic would be usable only in one described embodiment. The individual characteristics of two or more embodiments may be combined and new embodiments of the invention may thus be provided.

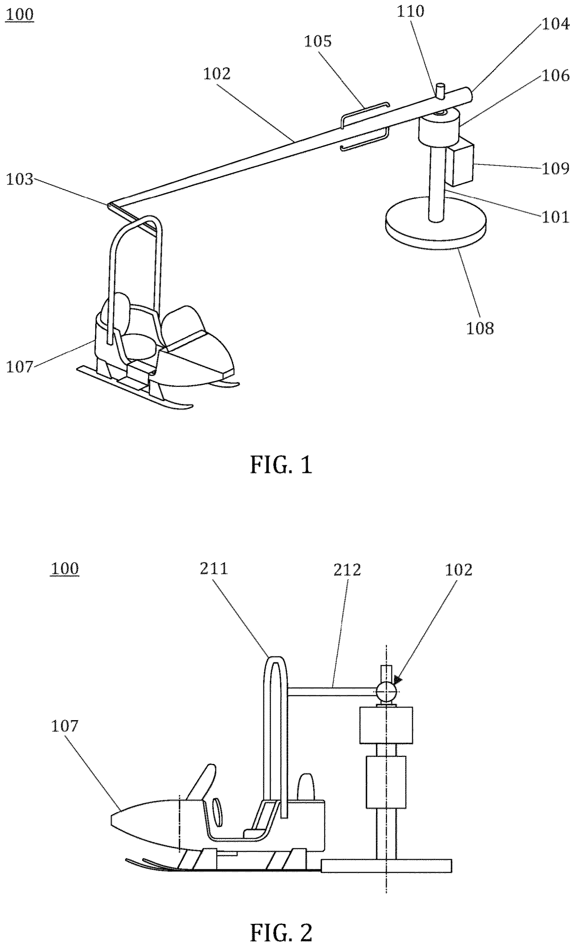

Figure 1 shows an example of an embodiment of a pole sledge 100. The pole sledge has a hub shaft 101, a boom 102 and a sledge arrangement 107. The pole sledge also has a pushing arrangement 105, a power unit 106, a stand 108 and a battery arrangement 109. In its operating state, the pole sledge is placed on a surface. Pole sledges generally have a direction of rotation and the sledge arrangement is positioned accordingly.

The hub shaft 101 of the pole sledge 100 is vertical and it is fixed to a base or a surface. To facilitate attachment and support of the pole sledge, some embodiments of the pole sledge have a stand 108. The mass of the stand holds the hub shaft in place at its position during use of the pole sledge. The power unit 106 is implemented on the hub shaft. The boom 102 has a first boom end 103 and a second boom end 104. The boom is an elongate structure that is straight in this embodiment. In the pole sledge according to the invention, the boom may in some embodiments also have another shape. For example, it may have stepped portions, the height of which relative to the surface may vary. The first boom end is attached to the sledge arrangement 107. The boom has an attachment point 110 and the boom is attached at its attachment point to the hub shaft. The hub shaft is then the centre of rotation of the boom. The attachment point is near the other end of the boom. The attachment is implemented in such a way that the boom can be rotated at least in the direction of rotation. In conventional pole sledges, the boom extends over the attachment point in such a way that the rotation point of the sledge, i.e. the point where the person or persons rotating the pole sledge push against the boom, comes between the other end of the boom and the attachment point. The boom must then extend far enough to give the rotating persons enough leverage. In the pole sledge according to the example, this is not necessary, but the attachment point can be placed in the immediate vicinity of the other end of the boom. In this case, the pushing point comes between the sledge arrangement 107 and the attachment point.

The power unit 106 of the pole sledge 100 is arranged to rotate the boom 102 at least in the direction of rotation. The power unit is a motor, the operation of which, i.e. the rotational power applied to the boom, is adjustable. This allows the speed of the boom and thus the sledge arrangement 107 to be adjusted when the pole sledge is used. Advantageously, the power unit is an electric motor and is powered by a battery arrangement 109. The power unit is connected to the hub shaft 101. In this example, the power unit is located on the hub shaft below the boom. There are embodiments in which the power unit is located on the hub shaft above the boom attachment point 110. In this case, the boom can be placed lower than in traditional pole sledges. In such embodiments, the pushing arrangement 105 extends above the boom in such a way that the person rotating the pole sledge does not have to bend over. The lowered boom makes it possible to reduce the mechanical stress affecting the attachment of the sledge arrangement and to reduce any possible visual obstructions towards the sledge arrangement as caused by the boom. In one embodiment, the power unit has a sensor to measure the rotational speed of the power unit, i.e. the speed of the boom.

The pushing arrangement is configured is such a way that the user can push the boom 102 manually. The pushing arrangement 105 is advantageously shaped in such a way that the person pushing the pole sledge 100 has an easy grip on it. The pushing arrangement has a connection arrangement to the power unit 106. This may be wired or wireless. If the connection arrangement is wireless, the pushing arrangement has a power supply, such as a battery. The pushing arrangement controls the operation of the power unit, i.e. the rotation of the boom and its speed. In this example, the pushing arrangement is located closer to the attachment point 110 of the boom than to the first boom end 103.

The pushing arrangement 105 has at least a first position and a second position. The pushing arrangement and the power unit 106 are configured in such a way that the power unit engages when the pushing arrangement is moved from the first position to the second position. The power unit stops rotating the boom 102 when the pushing arrangement is move back to the first position. The boom and the sledge arrangement 107 then begin to decelerate unless the person rotating the pole sledge continues to rotate the boom by pushing against the boom. The pole sledge according to the invention has one mode of operation in which the person rotating the pole sledge uses the power unit to give the pole sledge a starting speed and then continues by pushing against the boom itself and, if necessary, effects a speed increase with the pushing arrangement. Naturally, the pushing arrangement and at the same time, the power unit can be operated throughout the use of the pole sledge. Advantageously, the pushing arrangement has an arrangement that automatically returns the pushing arrangement to the first position if the person rotating no longer applies force onto the pushing arrangement. The direction of movement of the pushing arrangement or a part of the pushing arrangement from the first position to the second position is parallel to the direction of rotation of the boom. This makes moving the pole sledge using the power unit intuitive. In some embodiments, in addition to the second position of the pushing arrangement, there are a number of other positions of the pushing arrangement in which the power unit is configured to engage, and the pushing arrangement and the power unit are further configured to rotate the boom at different speeds. In some embodiments, the pushing arrangement is then configured in such a way that different amounts of force must be applied to the pushing arrangement to move the pushing arrangement from the first position to another position in which the power unit rotates the boom in the direction of travel. Advantageously, the pushing arrangement is configured to control the power unit in such a way that the more vigorously the person rotating pushes against the pushing arrangement, the faster the power unit rotates the boom.

In some embodiments, the pushing arrangement 105 has a third position of the pushing arrangement. In this case, the pushing arrangement, and the power unit 106 are configured in such a way that the power unit actively slows down the rotational movement of the boom when the pushing arrangement is moved to the third position. When the boom is stopped, the power unit stops, meaning it either shuts off or enters standby mode. The power unit can be restarted by moving it to another position again. Deceleration can also be stopped by moving the pushing arrangement from the third position to the first position. The direction of movement of the pushing arrangement or a part of the pushing arrangement from the first position to the third position is opposite to the direction of rotation of the boom. In one embodiment, if the power unit detects that the boom is stationary and the pushing arrangement is moved from the first position to the third position, the power unit moves the boom at some constant speed against the direction of rotation of the pole sledge, i.e. the sledge arrangement 107 reverses.

For example, moving the pushing arrangement 105 between different positions may be implemented mechanically and the position of the pushing arrangement is registered by some sensor arrangement and the position is sent to the power unit 106. In this mechanical implementation, for example, there may be springs or the like that resist the movement of the pushing arrangement between the different positions. Such an implementation avoids accidental selection of a large or even the maximum rotational force. There are also embodiments in which the pushing arrangement is implemented at least in part using pressure sensors. In this case, some position of the pushing arrangement represents a certain force or range of forces as registered by the pressure sensor, and these correspond to a power setting of the power unit. For example, the first position may be equivalent to the range of zero to some value registered by the pressure sensor. In this case, the pushing arrangement must be subjected to an excessive force before instructing the power unit to start rotating the boom. This can also be done with the mechanical solution mentioned earlier. When the force exerted by the rotating person on the pressure sensor decreases, so when the person decreases the pushing force or stops pushing, the pushing arrangement moves back to the first position and the power unit stops rotating the boom.

Figure 2 shows the pole sledge 100 shown in Figure 1 as viewed along the longitudinal axis of the boom 102. The sledge arrangement 107 has a safety arch 211 to which the boom is attached by a connecting piece 212. The connecting piece is positioned in such a way that the sledge arrangement is in front of the longitudinal axis of the boom. This makes it easier for the person rotating the pole sledge the monitor the sledge arrangement and its occupant or occupants, since his or her viewing direction does not need to be changed to a great degree.

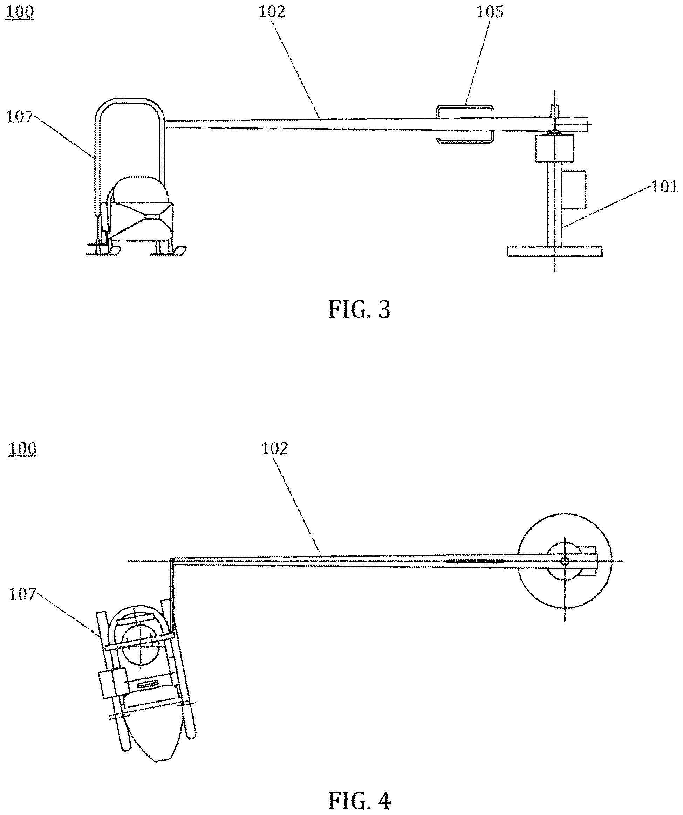

Figure 3 is a side view of the pole sledge 100 shown in Figure 1 with the boom 102 transverse to the viewing direction. The pushing arrangement 105 is between the hub shaft 101 and the sledge arrangement 107, and the pushing arrangement is closer to the hub shaft than the sledge arrangement. In this case, the person rotating the pole sledge does not have to move very fast and the sledge arrangement still gains sufficient speed. The placement of the pushing arrangement also allows a conventional type of boom to be pushed to effect rotation. In this case, the person rotating moves from the pushing arrangement towards the sledge arrangement in such a way that the new pushing point provides a sufficiently long lever arm.

Figure 4 is a top view of the pole sledge 100 shown in Figure 1. The sledge arrangement 107 is attached to the boom 102 in such a way that the sledge arrangement is in front of the boom with respect to the direction of rotation of the boom. In order for the longitudinal axis of the sledge arrangement to be parallel to the circumference, the sledge arrangement is slightly oblique to the hub axis 101 with respect to the transverse direction of the boom. Of course, there are embodiments in which the sledge arrangement is attached to the boom from its centre. In this case, the longitudinal axis of the sledge arrangement is transverse to the longitudinal axis of the boom.

Some advantageous embodiments of the device according to the invention have been described above. The invention is however not limited to the embodiments described above, but the inventive idea can be applied in numerous ways within the scope of the claims.

## Claims

1. A pole sledge (100) having a vertical hub shaft (101), a boom (102) having a first boom end (103) and a second boom end (104), a power unit (106) and a sledge arrangement (107), and the first boom end is attached to the sledge arrangement and the boom is fixed to the hub shaft, and the boom and the attachment of the boom to the hub shaft are configured in such a way that the boom is rotatable relative to the hub shaft in such a way that the hub shaft is the centre of rotational movement, and the power unit (106) is configured to rotate the boom, **characterized in that** the power unit is connected to the hub shaft, and the pole sledge further has a pushing arrangement (105) attached to the boom for pushing the pole sledge by the user to rotate the boom, the pushing arrangement having at least a first position and a second position, and the pushing arrangement and power unit are configured to engage when the pushing arrangement is moved from the first to second position and the power unit stops rotating the boom when the pushing arrangement is moved back to the first position.

2. A pole sledge (100) according to claim 1, **characterized in that** the boom (102) is fastened to the hub shaft (101) at least in part by means of the power unit (106).

3. A pole sledge (100) according to any of claims 1 to 2, **characterized in that** the power unit (106) is located on the hub shaft (101) below the attachment point (110) of the boom (102).

4. A pole sledge (100) according to any of claims 1 to 3, **characterized in that** the pushing arrangement (105) is at least partially above the boom (102).

5. A pole sledge (100) according to any of claims 1 to 4, **characterized in that** the power unit (106) is electrically operated and the pole sledge also has a battery arrangement (109).

6. A pole sledge (100) according to claim 5, **characterized in that** the battery arrangement (109) is removable.

7. A pole sledge (100) according to any of claims 1 to 6, **characterized in that** the direction of movement of the pushing arrangement (105) or a part of the pushing arrangement from the first position to the second position is parallel to the direction of rotation of the boom (102).

8. A pole sledge (100) according to any of claims 1 to 7, **characterized in that** in addition to the second position of the pushing arrangement (105) there are a number of other pushing arrangement positions in which the power unit (106) is configured to engage, and the pushing arrangement and the power unit are further configured in such a way that at said positions of the pushing arrangement, the power unit rotates the boom at different speeds.

9. A pole sledge (100) according to claim 8, **characterized in that** the pushing arrangement (105) is configured in such a way that different amounts of force must be applied to the pushing arrangement to move the pushing arrangement from the first position to another position where the power unit (106) rotates the boom in the direction of rotation.

10. A pole sledge (100) according to claim 9, **characterized in that** the pushing arrangement (105) and the power unit (106) are configured in such a way that the rotation of the boom is accelerated when a greater force is applied to the pushing arrangement within an adjustment range of the pushing arrangement.

11. A pole sledge (100) according to any of claims 1 to 10, **characterized in that** the pushing arrangement (105) is located between the hub shaft (101) and the sledge arrangement (107), and the pushing arrangement is closer to the hub shaft than to the sledge arrangement.

12. A pole sledge (100) according to any of claims 1 to 11, **characterized in that** the pushing arrangement (105) is configured to return automatically to the first position if the pushing arrangement is not actively held away from the first position.

13. A pole sledge (100) according to any of claims 1 to 12, **characterized in that** the pushing arrangement (105) has a third position of the pushing arrangement, and the pushing arrangement and the power unit (106) are configured in such a way that the power unit actively slows down the boom rotation when the pushing arrangement is moved to the third position.

14. A pole sledge (100) according to claim 13, **characterized in that** the direction of movement of the pushing arrangement (105) or a part of the pushing arrangement from the first position to the third position is opposite to the direction of rotation of the boom.

## Patentansprüche

1. Stangenschlitten (100) mit einer vertikalen Nabenwelle (101), einem Ausleger (102) mit einem ersten Auslegerende (103) und einem zweiten Auslegerende (104), einer Antriebseinheit (106) und einer Schlittenanordnung (107) und das erste Auslegerende an der Schlittenanordnung angebracht ist und der Ausleger an der Nabenwelle befestigt ist, und der Ausleger und die Befestigung des Auslegers an der Nabenwelle so konfiguriert sind, dass der Ausleger relativ zur Nabenwelle drehbar ist, so dass die Nabenwelle das Zentrum der Drehbewegung ist, und die Antriebseinheit (106) so konfiguriert ist, dass der Ausleger rotiert, **dadurch gekennzeichnet, dass** die Antriebseinheit mit der Nabenwelle verbunden ist, und der Stangenschlitten ferner eine Schubanordnung (105) aufweist, die an dem Ausleger angebracht ist, damit der Benutzer den Stangenschlitten schieben kann, um den Ausleger zu rotieren, die Schubanordnung mindestens eine erste Position und eine zweite Position aufweist, und die Schubanordnung und die Antriebseinheit Einheit so konfiguriert sind, dass sie einrasten, wenn die Schubvorrichtung von der ersten in die zweite Position bewegt wird, und die Antriebseinheit die Drehung des Auslegers stoppt, wenn die Schubvorrichtung zurück in die erste Position bewegt wird.

2. Stangenschlitten (100) nach Anspruch 1, **dadurch gekennzeichnet, dass** der Ausleger (102) zumindest teilweise mittels der Antriebseinheit (106) an der Nabenwelle (101) befestigt ist.

3. Stangenschlitten (100) nach einem der Ansprüche 1 bis 2, **dadurch gekennzeichnet, dass** die Antriebseinheit (106) an der Nabenwelle (101) unterhalb des Befestigungspunkts (110) des Auslegers (102) angeordnet ist.

4. Stangenschlitten (100) nach einem der Ansprüche 1 bis 3, **dadurch gekennzeichnet, dass** die Schubvorrichtung (105) zumindest teilweise oberhalb des Auslegers (102) angeordnet ist.

5. Stangenschlitten (100) nach einem der Ansprüche 1 bis 4, **dadurch gekennzeichnet, dass** die Antriebseinheit (106) elektrisch betrieben ist und der Stangenschlitten ferner eine Batterieanordnung (109) aufweist.

6. Stangenschlitten (100) nach Anspruch 5, **dadurch gekennzeichnet, dass** die Batterieanordnung (109) abnehmbar ist.

7. Stangenschlitten (100) nach einem der Ansprüche 1 bis 6, **dadurch gekennzeichnet, dass** die Bewegungsrichtung der Schubvorrichtung (105) oder eines Teils der Schubvorrichtung von der ersten Position in die zweite Position parallel zur Drehrichtung des Auslegers (102) ist.

8. Stangenschlitten (100) nach einem der Ansprüche 1 bis 7, **dadurch gekennzeichnet, dass** es zusätzlich zu der zweiten Position der Schubvorrichtung (105) eine Anzahl weiterer Schubvorrichtungspositionen gibt, in denen die Antriebseinheit (106) eingreifen kann, und dass die Schubvorrichtung und die Antriebseinheit ferner so konfiguriert sind, dass in den genannten Positionen der Schubvorrichtung die Antriebseinheit den Ausleger mit unterschiedlichen Geschwindigkeiten dreht.

9. Stangenschlitten (100) nach Anspruch 8, **dadurch gekennzeichnet, dass** die Schubvorrichtung (105) derart ausgestaltet ist, dass unterschiedliche Kräfte auf die Schubvorrichtung ausgeübt werden müssen, um die Schubvorrichtung von der ersten Position in eine andere Position zu bewegen, in der die Antriebseinheit (106) den Ausleger in Drehrichtung dreht.

10. Stangenschlitten (100) nach Anspruch 9, **dadurch gekennzeichnet, dass** die Schubvorrichtung (105) und die Antriebseinheit (106) derart ausgestaltet sind, dass die Drehung des Auslegers beschleunigt wird, wenn innerhalb eines Verstellbereichs der Schubvorrichtung eine größere Kraft auf die Schubvorrichtung ausgeübt wird.

11. Stangenschlitten (100) nach einem der Ansprüche 1 bis 10, **dadurch gekennzeichnet, dass** sich die Schubvorrichtung (105) zwischen der Nabenwelle (101) und der Schlittenvorrichtung (107) befindet und die Schubvorrichtung näher an der Nabenwelle als an der Schlittenvorrichtung liegt.

12. Stangenschlitten (100) nach einem der Ansprüche 1 bis 11, **dadurch gekennzeichnet, dass** die Schubvorrichtung (105) so ausgebildet ist, dass sie automatisch in die erste Position zurückkehrt, wenn die Schubvorrichtung nicht aktiv von der ersten Position ferngehalten wird.

13. Stangenschlitten (100) nach einem der Ansprüche 1 bis 12, **dadurch gekennzeichnet, dass** die Schubvorrichtung (105) eine dritte Schubvorrichtungsposition aufweist, und die Schubvorrichtung und die Antriebseinheit (106) so konfiguriert sind, dass die Antriebseinheit die Auslegerdrehung aktiv verlangsamt, wenn die Schubvorrichtung in die dritte Position bewegt wird.

14. Stangenschlitten (100) nach Anspruch 13, **dadurch gekennzeichnet, dass** die Bewegungsrichtung der Schubvorrichtung (105) oder eines Teils der Schubvorrichtung von der ersten Position in die dritte Position entgegengesetzt zur Drehrichtung des Auslegers ist.

## Revendications

1. Traîneau à perche (100) ayant un arbre de moyeu vertical (101), une flèche (102) ayant une première extrémité de flèche (103) et une seconde extrémité de flèche (104), une unité de puissance (106) et un agencement de traîneau (107), et la première extrémité de flèche est fixée à l'agencement de traîneau et la flèche est fixée à l'arbre de moyeu, et la flèche et la fixation de la flèche à l'arbre de moyeu sont configurées de telle manière que la flèche peut tourner par rapport à l'arbre de moyeu de telle manière que l'arbre de moyeu est le centre du mouvement de rotation, et l'unité de puissance (106) est configurée pour faire tourner la flèche, **caractérisé en ce que** l'unité de puissance est connectée à l'arbre de moyeu, et le traîneau à perche a en outre un agencement de poussée (105) fixé à la flèche pour pousser le traîneau à perche par l'utilisateur afin de faire tourner la flèche, l'agencement de poussée ayant au moins une première position et une deuxième position, et l'agencement de poussée et l'unité de puissance sont configurés pour venir en prise lorsque l'agencement de poussée est déplacé de la première à la deuxième position et l'unité de puissance arrête de faire tourner la flèche lorsque l'agencement de poussée est ramené à la première position.

2. Traîneau à perche (100) selon la revendication 1, **caractérisé en ce que** la flèche (102) est fixée à l'arbre de moyeu (101) au moins en partie au moyen de l'unité de puissance (106).

3. Traîneau à perche (100) selon l'une quelconque des revendications 1 à 2, **caractérisé en ce que** l'unité de puissance (106) est située sur l'arbre de moyeu (101) en dessous du point de fixation (110) de la flèche (102).

4. Traîneau à perche (100) selon l'une quelconque des revendications 1 à 3, **caractérisé en ce que** l'agencement de poussée (105) est au moins partiellement au-dessus de la flèche (102).

5. Traîneau à perche (100) selon l'une quelconque des revendications 1 à 4, **caractérisé en ce que** l'unité de puissance (106) est actionnée électriquement et le traîneau à perche a également un agencement de batterie (109).

6. Traîneau à perche (100) selon la revendication 5, **caractérisé en ce que** l'agencement de batterie (109) est amovible.

7. Traîneau à perche (100) selon l'une quelconque des revendications 1 à 6, **caractérisé en ce que** la direction de déplacement de l'agencement de poussée (105) ou d'une partie de l'agencement de poussée de la première position à la deuxième position est parallèle à la direction de rotation de la flèche (102).

8. Traîneau à perche (100) selon l'une quelconque des revendications 1 à 7, **caractérisé en ce qu'**en plus de la deuxième position de l'agencement de poussée (105), il existe un certain nombre d'autres positions de l'agencement de poussée dans lesquelles l'unité de puissance (106) est configurée pour venir en prise, et l'agencement de poussée et l'unité de puissance sont en outre configurés de telle manière qu'au niveau desdites positions de l'agencement de poussée, l'unité de puissance fait tourner la flèche à des vitesses différentes.

9. Traîneau à perche (100) selon la revendication 8, **caractérisé en ce que** l'agencement de poussée (105) est configuré de telle manière que différentes quantités de force doivent être appliquées à l'agencement de poussée pour déplacer l'agencement de poussée de la première position à une autre position dans laquelle l'unité de puissance (106) fait tourner la flèche dans la direction de rotation.

10. Traîneau à perche (100) selon la revendication 9, **caractérisé en ce que** l'agencement de poussée (105) et l'unité de puissance (106) sont configurés de telle manière que la rotation de la flèche est accélérée lorsqu'une force plus importante est appliquée à l'agencement de poussée dans une plage de réglage de l'agencement de poussée.

11. Traîneau à perche (100) selon l'une quelconque des revendications 1 à 10, **caractérisé en ce que** l'agencement de poussée (105) est situé entre l'arbre de moyeu (101) et l'agencement de traîneau (107), et l'agencement de poussée est plus proche de l'arbre de moyeu que de l'agencement de traîneau.

12. Traîneau à perche (100) selon l'une quelconque des revendications 1 à 11, **caractérisé en ce que** l'agencement de poussée (105) est configuré pour revenir automatiquement à la première position si l'agencement de poussée n'est pas activement maintenu à l'écart de la première position.

13. Traîneau à perche (100) selon l'une quelconque des revendications 1 à 12, **caractérisé en ce que** l'agencement de poussée (105) a une troisième position de l'agencement de poussée, et l'agencement de poussée et l'unité de puissance (106) sont configurés de telle manière que l'unité de puissance ralentit activement la rotation de la flèche lorsque l'agencement de poussée est déplacé vers la troisième position.

14. Traîneau à perche (100) selon la revendication 13, **caractérisé en ce que** la direction de déplacement de l'agencement de poussée (105) ou d'une partie de l'agencement de poussée de la première position à la troisième position est opposée à la direction de rotation de la flèche.
